# EUROPEAN PATENT SPECIFICATION

(11) **EP 2 741 617 B1**
(45) Date of publication and mention of the grant of the patent: **25.11.2015**
(21) Application number: 12781435.8
(22) Date of filing: 08.08.2012
(51) Int. Cl.: A23L 1/015, A23L 1/212, A23L 1/29, A23L 1/30

(54) **BABY AND INFANT FOOD CONTAINING WHOLE OLIVES**
BABY- UND KLEINKINDNAHRUNG MIT GANZEN OLIVEN
ALIMENT POUR BÉBÉ ET ENFANT EN BAS ÂGE CONTENANT DES OLIVES ENTIÈRES

(30) Priority: 09.08.2011 TR 201107872
(43) Date of publication of application: 18.06.2014
(73) Proprietor: Tubitak, 06100 Ankara (TR)
(72) Inventor: OZTURK, Tarik, 41470 Kocaeli (TR); UYGUN, Nabi, 41470 Kocaeli (TR); GOZUM, Ender, 41470 Kocaeli (TR); BORCAKLI, Mehlika, 41470 Kocaeli (TR)
(86) International application number: PCT/IB2012/054045
(87) International publication number: WO 2013/021356

(56) References cited:
- EP-A1- 2 036 447
- EP-A2- 0 484 266
- WO-A2-2009/030487
- IT-A1- CB 950 001
- US-A- 6 051 235
- Everett Washington: "Is it okay to feed my 9-month old baby black olives (put inside a mesh baby feeder)?", Yahoo Answers , 24 December 2009 (2009-12-24), XP002688196, Retrieved from the Internet: URL:http://answers.yahoo.com/question/inde x?qid=20091224124847AAfbNvh [retrieved on 2011-11-28]
- DATABASE WPI Week 200356 Thomson Scientific, London, GB; AN 2003-587739 XP002688197, & CN 1 416 732 A (ZHENG J) 14 May 2003 (2003-05-14)
- Soner Tuna ET AL: "The Use of beta-Glucosidase Enzyme in Black Table Olives Fermentation", AcademicPres notulae Botanicae Horti Agrobotanici Cluj-Napoca, vol. 37, no. 2 1 January 2009 (2009-01-01), pages 182-189, XP055045989, Retrieved from the Internet: URL:http://notulaebotanicae.ro/nbha/articl e/viewFile/3145/3199 [retrieved on 2012-11-29]
- Mark Dymiotis: "Processing Olives", Living Simply - The Traditional Greek/Mediterranean Way , 30 April 2002 (2002-04-30), XP002688198, Retrieved from the Internet: URL:http://www.markdymiotis.com/food/proce ssing-olives/ [retrieved on 2012-11-29]
- DATABASE WPI Week 200671 Thomson Scientific, London, GB; AN 2006-683684 XP002688199, & JP 2006 257061 A (SUN INT KK) 28 September 2006 (2006-09-28)

## Description

### Subject of the invention

Subject of the invention is the baby and infant food containing the whole olives.

### State of the art

### Olive oil in Mediterranean Diet

Olive oil has an important role in Mediterranean Diet. Olive oil being the main oil, is used, in preparation of dishes and traditionally in homemade baby foods. Olive oil taking part in Mediterranean diet helps to protect cardiovascular system, regulate immune system and prevent cancer, protect the homeostasis of the body, prevent obesity. (Lopez, 2010; Saura-Calixto and Goñi, 2009; Miranda 2007; Puertollano 2010; Pauwels and Kostkiewicz 2010).

Many consumers, becoming concious by this reason, increase the olive oil consumption and try to be nourished by Mediterranean Diet. This trend inspired some baby food producers such as Plum-Baby and they started to produce baby and infant foods with olive oil. Pureed baby foods constitutes an important part of the baby and infant foods. They are generally sold in sterilized jars and consumed directly, once they are opened.

### Difference between olive oil and whole olives

Olive oil having high content of oil, do not include protein and carbohydrate, but calcium, iron, sodium and potassium in small amount. Besides these, oil soluble alfa, beta and gama tocopherol, vitamin K is found in olive oil. However, in addition to natural oil, whole olives contain 3% lignin, valuable diet fiber with less than 0.5 lignin/ cellulose ratio, 80 times more calcium, 8 times more potassium and 6 times more iron than oil, along with magnesium, phosphorus, tin, copper, manganese and selenium. Olives furthermore contains vitamin A, vitamin C, tiamin, niasin, pentothenic acid, vitamin B6, lutein+zeaxhanthin which is not present in olive oil. Whole olive is a good fiber source with 1.5 g fiber content per 100 kcalorie and do not contain compounds such as phytic acid which impedes iron absorbsion. Another important advantage of olives is to have much more oleuropein and other phenolic subtances compared to olive oil. (Peri, E., Raffaelli, A. & Sindona G., 1999 Quantitation of oleuropein in virgin olive oil by ion spray mass spectrometry-selected reaction monitoring, J. Agric. Food Chem., 47, 4156-4160).

In brief, whole olives are much more rich than olive oil in vitamin, mineral, fiber and phenolic substances and contains purest oil not exposed to any extraction process. In the world demand to less processed and refined foods along with health benefits, are increasing. This situation provides an important advantage of competition to baby food containing olives compared to baby food with oil.

In spite of these advantages mentioned above the most important reason that olives are not used in baby foods but traditionally olive oil, is the bitterness of the olive fruit. Infant and baby food that can comprise fruit such as for example olive are referred to in EP 2 036 447 and WO 2009/030487.

Bitterness of olives are traditionally removed in brine or in sodium hydroxide. Olives debittered by salty water is not convenient to baby consumption because of salt content. Debittering of olives with sodium hydroxide is undesirable to babies because of chemical treatment.

For debittering of olives as indicated in the known state of technique in 'Method and device for removing the bitterness from table olives and product 'WO2009/106669 A1' an alternative method is found and without using salt and sodium hydroxide, 1.3-1.8 bar pressurized air at controlled temperature is given to olives in a rotating system during 24-78 hours and oxidation of oleuropein is assured. By this method olives are debittered.

### Technical problems to be solved by this invention

Olive fruits have a bitter taste due to mainly its oleuropein and polyphenol content.Bitter taste has to be removed and/or suppressed to be used in baby/infant food.Due to our invention as defined in claim 1 whole olives can be use in baby foods. Whole olives, used in the products, being subject to this invention, are debittered olives, not submitted to any chemical treatment but stoneless and reduced to appropriate size. Whole olives in question with all properties and content are mixed at appropriate rates of cereal, fruit, sugar, sweeteneers and all kinds of taste suppression agents to obtain products with suppressed bitter taste.

Bitter taste before being suppressed by mixing at appropriate ratio of cereal, fruit, sugar, sweteneers and all kinds of taste suppression agents, bitterness is removed by an organic way similar to brining; by using different concentrations of sugar (5%-20%) solutions and fruit/vegetable juice, olive bitterness is transferred to the sweet water and instead of salty olives, light sugar tasting olives are obtained.

Example 1: Black olives without stone are placed in water or in black grape juice with sugar content regulated to 5% sugar, in the ratio of 1/1 olive/solution and the container is covered. At the end of 2 days sugar solution is replaced with new one and after waiting in sugar solution, at the end of 3 days, debittered olives with pleasant aroma are obtained.

After removing bitterness with an organic way, remaining bitter taste is suppressed and products with suppressed bitter taste are obtained by mixing whole olives in question with their all properties and content, at appropriate rates of cereal, fruit, sugar, sweeteneers and all kinds of taste suppression agents.

### Description of the invention

### 4.1. Baby food production containing olives

### 4.1.1. Pureed baby food production:

In the production of pureed baby food containing olives, cereal is used to increase the viscosity, fruits to give the required taste and olives are added to this basic mixture. Added olives are debittered and their stones are removed by mechanical processes and reduced to appropriate size that babies and/or infants can eat. Basic mixture is prepared by subjecting the mixture to 50 ° C-150 °C during 5 minutes to 1 hour. Olives are added to this mixture at desired ratio between 10%-50%. The mixture obtained at the end of this process is bottled and sterilized between 75 °C-150 ° C from 15 seconds to 1 hour, to be ready for consumption.

### Example 1:

With the aim of bottled baby food preparation 7% rice meal, 14% dried grapes, 16% apple in weight basis and 42% water are put in a cooking vessel with mixer to prepare a baby food base. 21 % debittered olive fruit with sugar is added and after homogenization by ultra-tourax, is transferred to glass bottles and sterilized. Another homogenizer can be used to reduce olive fruit into small pieces.

### Example 2: (not according to the invention)

13% rice meal, 7% apple, 7% dried grapes, in weight basis and 63% water is heated in a covered cooking vessel until reaching a viscouse structure and bitter, stoneless turning color Edremit olives at ratio of 10% is added. This mixture is homogenized and sterilized in bottles/jars.

Olives other than Edremit cultivar at different maturity stage can be used provided that the bitter substance (oleuropein) is less than 0.3% of the baby food in weigth bases and considering the oil quantity and composition.

The oil quantity should be considered according to the oil quantity and composition of the olive and regulated in the manner that oil quantity will not exceed 5 g in 100 kcal of the baby food. In case it exceeds, linoleic acid level will not be less than 5% (weight basis) of the whole olive fruit oil. Oil extracted olives can be used by taking into account the same oil and linoleic acid ratio.

### 4.1.2. Powdered baby food production:

Besides pureed baby foods, consumers are interested in powdered formulations that results in baby foods when they are mixed with boiled and warmed water. Whole olives comprising mixture of cereal powder, protein, mineral and vitamin are homogenized after sugar addition in a mixer to prepare this mixture.

### Example 3:

Hydrolyzed cereal powder having 50% whole olive is mixed with 20% hydrolyzed cereal flour, 16% sugar, 10%-85% milk protein concentrate and 0.02% vitamin, mineral mixture at 54% rate of total baby food weight, in dry basis and all mixture is homogenized in a mixer.

In addition, the subject of this invention being the baby/infant foods having whole olive fruits, can contain, additives such as

nucleotids, prebiotics, probiotics, vitamins, minerals and can also be processed by unconventional systems such as UV, pulsed UV, ozon, omic heating and pulsed electric field. This invention is developed for consumption from the 4.months old babies but can be developped for the other age groups with adjuncts addition.

## Claims

1. Baby or infant food, which contains salt free and non chemically treated olives that covers processing steps below;
a. Olives are soaked and debittered in 5-20% sugar solution,
b. Olives debittered in sugar solution, where the sugar solution has 5-20% sugar, are pureed,
c. Ingredients except olives are heat treated at 50-150°C for 5 minutes to 1 hour,
d. Addition of 10-50% (weight basis) olive to the mixture
e. Sterilization of this mixture at 75-150°C for from 15 seconds to 1 hour in jars.

2. Baby or infant food, according to claim 1, wherein oil quantity of olive variety used, is selected according to its composition of olive oil.

3. Baby or infant food, according to claim 1, wherein olives used are debittered in fruit or vegetable juice.

4. Baby or infant food, according to claim 3, wherein bitterness of olives used is removed by soaking in black grape juice.

5. Baby or infant food according to claim 1, wherein, partly debittered olives are used in such a way that amount of oleuropein is less than 0.3% by weight of the baby food.

6. Baby or infant food according to claim 1, wherein, the oil amount in the food is adjusted according to the oil quantity and composition of the olive cultivar in a manner that oil amount will not exceed 7 g in 100 kcal of the baby food and the linoleic acid amount will not be less than 5% by weight of the oil coming from the olive fruit.

7. Baby or infant food according to claim 1, wherein, the oil amount in the food is adjusted according to the oil quantity and composition of the olive cultivar in a manner that oil amount will not exceed 5 g in 100 kcal of the baby food and even if it exceeds the linoleic acid amount will not be less than 5% by weight of the oil coming from the olive fruit.

8. Baby or infant food according to claim 1, wherein, the food can be prepared from oil-extracted partly debittered olives by increasing the amount of olives and regulating the oil ratio according to the Claim 6.

9. Baby or infant food according to claim 1, wherein, the food is produced in pureed or powdered form.

10. Baby or infant food according to claim 1, wherein, the food is developed for consumption for infants or babies starting from 4. months old but can be developed for the other age groups with adjunct additions.

11. Baby or infant food according to claim 1, wherein, the food contains, adjuncts such as nucleotids, prebiotics, probiotics, vitamins, minerals in addition.

## Patentansprüche

1. Säuglings-und Kindernahrung, die die salzfrei und chemisch unbehandelte Oliven umfasst, die unten Verarbeitungsschritte bezieht;
a. Oliven werden durchtränkt und entbittert in 5-20% Zuckerlösung,
b. Die in der Zuckerlösung entbitterten Oliven püriert werden, wobei Zuckerlösung 5-20% Zucker hat,
c. Ingredienzen außer Oliven werden wärmebehandelt bei 50-150°C für 5 Minuten bis 1 Stunde,
d. Zugabe von 10-50% (Gewichtsbasis) Olive zu dem Gemisch,
e. Sterilisation dieses Gemisches bei 75-150°C von 15 Minuten bis 1 Stunde in Gläsern.

2. Säuglings-und Kindernahrung nach Anspruch 1, wobei die verwendete Ölmenge der Olivensorte nach deren Zusammensetzung von Olivenöl ausgewählt wird.

3. Säuglings-und Kindernahrung nach Anspruch 1, wobei die verwendeten Oliven in dem Frucht- oder Gemüsesaft entbittert werden.

4. Säuglings-und Kindernahrung nach Anspruch 3, wobei die Bitterkeit der verwendeten Oliven durch Tränkung in dem Traubensaft entfernt wird.

5. Säuglings-und Kindernahrung nach Anspruch 1, wobei die teilweise entbitterten Oliven derart verwendet werden, dass die Menge an Oleuropein weniger als 0,3% des Gewichts der Säuglingsnahrung ist.

6. Säuglings-und Kindernahrung nach Anspruch 1, wobei die Ölmenge in der Nahrung gemäß der Ölmenge und die Zusammensetzung der Olivensorte derart eingestellt wird, dass die Ölmenge nicht 7 g in 100 kcal der Säuglingsnahrung übersteigt wird und die Menge an Linolsäure nicht weniger als 5 Gewichts-% des Öls aus der Olivenfrucht ist.

7. Säuglings-und Kindernahrung nach Anspruch 1, wobei die Ölmenge in der Nahrung gemäß der Ölmenge und die Zusammensetzung der Olivensorte derart eingestellt wird, dass die Ölmenge nicht 5 g in 100 kcal der Säuglingsnahrung übersteigt wird und auch wenn sie übersteigt, ist die Menge an Linolsäure nicht weniger als 5 Gewichts-% des Öls aus der Olivenfrucht.

8. Säuglings-und Kindernahrung nach Anspruch 1, wobei die Nahrung von die teilweise entbitterten Oliven, die von Öl entzogen wird, durch Erhöhen der Menge von Oliven und Regulieren der Öl-Verhältnis nach Anspruch 6 hergestellt werden kann.

9. Säuglings-und Kindernahrung nach Anspruch 1, wobei die Nahrung in pürierte oder Pulverform hergestellt ist.

10. Säuglings-und Kindernahrung nach Anspruch 1, wobei die Nahrung für den Verzehr für Säuglinge oder Kleinkinder ausgehend von 4 Monaten entwickelt wird, Kann aber für die anderen Altersgruppen mit zusätzlichen Zugängen entwickelt werden.

11. Säuglings-und Kindernahrung nach Anspruch 1, wobei die Nahrung Hilfsstoffe wie Nukleotide, Präbiotika, Probiotika, Vitaminen, Mineralien zusätzlich enthält.

## Revendications

1. Alimentation pour des nourrissons ou des bébés, qui contient des olives sans sel et qui ne sont pas traitées chimiquement, couvrant les étapes de processus ci-dessous :
a. Les olives sont trempées et désamérisées dans une solution de sucre de 5-20%,
b. Les olives désamérisées dans la solution de sucre, dans laquelle la solution de sucre a du sucre de 5-20%, sont en purée.
c. Les ingrédients sauf les olives sont thermotraités à 50-150°C pendant 5 minutes à 1 heure,
d. Addition d'olives de 10-50% (base du poids) à la mixture.
e. Stérilisation de cette mixture à 75-150 °C pendant 15 minutes à 1 heure dans des pots.

2. Alimentation pour des nourrissons ou des bébés selon la revendication 1, dans laquelle la quantité d'huile de variété d'olive utilisée est sélectionnée selon sa composition de l'huile d'olive.

3. Alimentation pour des nourrissons ou des bébés selon la revendication 1, dans laquelle les olives utilisées sont désamérisées dans de jus de fruits ou de légumes.

4. Alimentation pour des nourrissons ou des bébés selon la revendication 3, dans laquelle l'amertume des olives utilisées est enlevée par trempage de jus de raisins noirs.

5. Alimentation pour des nourrissons ou des bébés selon la revendication 1, dans laquelle les olives partiellement désamérisées sont utilisées de façon que la quantité de l'oleuropéine soit moins de 0.3% en poids de l'alimentation infantile.

6. Alimentation pour des nourrissons ou des bébés selon la revendication 1, dans laquelle la quantité d'huile dans l'alimentation est adaptée selon la quantité d'huile et de la composition du cultivar d'olive de façon que la quantité d'huile ne soit pas supérieure à 7 g dans 100 kcal de l'alimentation infantile et que la quantité de l'acide linoléique ne soit pas moins de 5% en poids d'olives provenant dé la fruit d'olivier.

7. Alimentation pour des nourrissons ou des bébés selon la revendication 1, dans laquelle la quantité d'huile dans l'alimentation est adaptée selon la quantité d'huile et de la composition du cultivar d'olive de façon que la quantité d'huile ne soit pas supérieure à 5 g dans 100 kcal de l'alimentation infantile et même si elle en est supérieure, la quantité de l'acide linoléique ne sera pas moins de 5% en poids d'huile provenant de la fruit d'olivier.

8. Alimentation pour des nourrissons ou des bébés selon la revendication 1, dans laquelle l'alimentation peut être préparée des olives extraites d'huile, partiellement désamérisées en augmentant la quantité d'olives et en régulant le taux d'huile selon la revendication 6.

9. Alimentation pour des nourrissons ou des bébés selon la revendication 1, dans laquelle l'alimentation est produite en purée ou en poudre.

10. Alimentation pour des nourrissons ou des bébés selon la revendication 1, dans laquelle l'alimentation est développée pour la consommation pour des nourrissons ou des bébés à partir de l'âge de 4 mois, mais peut être développée pour les autres groupes d'âge avec d'ajouts adjoints.

11. Alimentation pour des nourrissons ou des bébés selon la revendication 1, dans laquelle l'alimentation contient des adjoints comme des nucléotidés, prébiatiques, probiotiques, vitamines, minérales de plus.
